(19) Europäisches Patentamt
European Patent Office
Office européen des brevets

(11) **EP 2 570 454 B1**

(12) **EUROPEAN PATENT SPECIFICATION**

(45) Date of publication and mention
of the grant of the patent:
**18.09.2019 Bulletin 2019/38**

(21) Application number: **11780562.2**

(22) Date of filing: **09.05.2011**

(51) Int Cl.:
*C08J 9/12* ^(2006.01)          *B29B 11/16* ^(2006.01)
*B29K 105/12* ^(2006.01)      *B29C 44/34* ^(2006.01)
*B29K 77/00* ^(2006.01)        *C08J 9/00* ^(2006.01)

(86) International application number:
**PCT/JP2011/060633**

(87) International publication number:
**WO 2011/142305 (17.11.2011 Gazette 2011/46)**

(54) **METHOD OF FOAM MOLDING OF RESIN REINFORCED WITH FLAT GLASS FIBERS**

VERFAHREN ZUR SCHAUMFORMUNG EINES MIT FLACHEN GLASFASERN VERSTÄRKTEN HARZES

PROCÉDÉ DE MOULAGE DE MOUSSE D'UNE RÉSINE RENFORCÉE PAR DES FIBRES DE VERRE PLATES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.05.2010 JP 2010108170**

(43) Date of publication of application:
**20.03.2013 Bulletin 2013/12**

(73) Proprietor: **Nitto Boseki CO., LTD.**
**Fukushima 960-8161 (JP)**

(72) Inventor: **SATO Noriyoshi**
**Tokyo 102-0073 (JP)**

(74) Representative: **Hoffmann Eitle**
**Patent- und Rechtsanwälte PartmbB**
**Arabellastraße 30**
**81925 München (DE)**

(56) References cited:
**EP-A1- 1 988 126          EP-A2- 0 246 620**
**JP-A- 2002 363 326      JP-A- 2010 013 571**
**US-A1- 2008 167 415    US-A1- 2009 042 011**

**Description**

[Technical Field]

The present invention relates to a method for foam molding a glass fiber-reinforced resin which retains intact material properties inherent in a resin (particularly a polyamide resin), is reduced in weight and has an excellent mechanical strength, especially an excellent impact resistance, and has a finely and evenly foamed state, and relates to a foam-molded article thereof.

[Background Art]

A glass fiber-reinforced resin (particularly a glass fiber-reinforced polyamide resin) is widely used for several kinds of applications including a mobile application because of a good formability, mechanical properties, durability, oil and chemical resistances, and abrasion resistance thereof. Recently, a further weight saving and strength improvement are eagerly desired for a mobile application.

Conventional means for a weight saving is generally to mix a foaming agent with a resin, inject a mixture into a forming die, and carry out a foam molding to form a foam-molded article, but a mechanical strength of the foam-molded article is generally lowered. Recently, one pays attention to a superfine foam molding in which a fine foamed article is obtained by using a supercritical fluid of an inert gas such as carbon dioxide and nitrogen in place of a conventional chemical foaming agent of polystyrene etc. Strengths try to be maintained and improved by fine foaming, and several kinds of suggestions are provided for obtaining further fine and even air bubble.

For example, there are a method for increasing a fluidity by adding a plasticizer to nylon 66 resin (Patent Literature 1), a method of adding calcium phosphate to a polyamide resin (Patent Literature 2), and a method of using a certain specific polyamide resin (Patent Literature 3).

However, although the foam-molded articles prepared by these superfine foam moldings can form a finely and evenly foamed state, a problem of lowering a mechanical strength due to a presence of an air bubble is not avoided and thus is not actually almost solved at present. A weight saving and a maintenance of a mechanical strength remain remarkably unsatisfactory conditions, and an impact strength required for particularly a mobile application has not been obtained.

These three patent literatures disclose that a weight saving is expected, but do not specifically disclose at all what degree of weight saving is obtained with securing a mechanical strength.

In case of not a foam-molded article, for the purpose of improving a mechanical strength such as an impact resistance and a tensile strength of a molded article, a glass fiber having a flat cross section in which a cross section shape is flat (hereinafter referred to as "flat glass fiber") is used as a fiber for reinforcement in place of a conventional glass fiber in which a cross section shape is a round shape (hereinafter referred to as "round glass fiber") (for example, Patent Literatures 4 and 5).

Patent Literature 6 describes another glass fiber reinforced thermoplastic molded article which comprises a thermoplastic resin reinforced with glass fibers having an elongated non-circular cross-section such as an oblong shape, elliptic shape or cocoon-shape.

Patent Literature 7 describes a polymer composite article comprising a polymer matrix comprising a thermoplastic polymer, the polymer matrix having a cellular structure; and fibers dispersed in the polymer matrix, the fibers being present in the polymer matrix in an amount of at least about 10 percent by weight, wherein at least 10 percent of the fibers by volume have a length of greater than about 3 mm and wherein at least about 10 percent of the fibers by volume have a length of from about 3 mm to about 4 mm.

[Citation List]

[Patent Literature]

[Patent Literature 1] JP 2005-194532 A
[Patent Literature 2] JP 2006-8952 A
[Patent Literature 3] JP 2002-363326 A
[Patent Literature 4] JP 2009-79215 A
[Patent Literature 5] JP 2008-260229 A
[Patent Literature 6] EP 0 246 620 A2
[Patent Literature 7] US 2009 0042011 A1

[Summary of Invention]

[Technical Problem]

However, it has been conventionally understood that a small improvement effect on an enhancement of a mechanical strength due to a use of flat glass fibers can be expected but is limited and is not at a satisfactory level, in view of a remarkable lowering of a mechanical strength of a foam-molded article as compared to a solid prepared by not a foam molding.

As mentioned above, it has not been conventionally found that an injection foam-molded article having a finely and evenly foamed state and having a small lowering of strength properties is obtained in a foam-molded article of a glass fiber-reinforced resin (particularly a glass fiber-reinforced polyamide resin).

The present invention was accomplished based on a result of study to solve the problems in these prior arts.

That is, the purpose of the present invention is to provide an injection foam-molded article which retains intact material properties inherent in a glass fiber-reinforced resin (particularly a glass fiber-reinforced polyamide resin), has a finely and evenly foamed state, and has a small lowering of mechanical strength properties.

[Solution to Problem]

The present inventors have studied to solve the above problems, and in result they found that a glass fiber-reinforced resin foam-molded article attaining the above purpose is obtained by subjecting a glass fiber having a specific shape and a resin (particularly a polyamide resin) to an injection foam molding using a foaming agent (particularly a supercritical fluid).

The present invention is mentioned below.

[1] A method for foam molding a flat glass fiber-reinforced resin comprising the step of:

adding a foaming agent to a flat glass fiber resin composition containing a resin and flat glass fibers to perform an injection foam molding,
wherein said resin is nylon 6,
wherein said foaming agent is a supercritical fluid,
wherein said flat glass fiber resin composition contains said flat glass fibers in an amount of from 3 to 15 wt% relative to said flat glass fiber resin composition, and
wherein a filament cross section of said flat glass fibers has an aspect ratio (major axis/minor axis) of from 1.5 to 10.

[2] The method for foam molding a flat glass fiber-reinforced resin according to [1], wherein a converted fiber diameter of said flat glass fibers, which represents a diameter of a round shape having an area same as an area of a cross section shape of said flat glass fibers, is from 3 $\mu$m to 30 $\mu$m.

[3] The method for foam molding a flat glass fiber-reinforced resin according to [1] or [2], wherein said supercritical fluid is $CO_2$.

[4] A flat glass fiber-reinforced resin foam-molded article which is obtainable by adding a foaming agent to a flat glass fiber resin composition containing a resin and flat glass fibers having a flat glass filament cross section shape to perform an injection foam molding
wherein said resin is nylon 6,
wherein said foaming agent is a supercritical fluid,
wherein said flat glass fiber resin composition contains said flat glass fibers in an amount of from 3 to 15 wt% relative to said flat glass fiber resin composition, and
wherein a filament cross section of said flat glass fibers has an aspect ratio (major axis/minor axis) of from 1.5 to 10.

That is, the method for foam molding a flat glass fiber-reinforced resin of the present invention comprising the step of: adding a foaming agent to a flat glass fiber resin composition containing a resin and flat glass fibers having a flat fiber cross section shape to subject to an injection foam molding, wherein said resin is nylon 6, wherein said foaming agent is a supercritical fluid, wherein said flat glass fiber resin composition contains said flat glass fibers in an amount of from 3 to 15 wt% relative to said flat glass fiber resin composition, and wherein a filament cross section of said flat glass fibers has an aspect ratio (major axis/minor axis) of from 1.5 to 10.

Additionally, the flat glass fiber-reinforced resin foam-molded article of the present invention is produced by adding a foaming agent to a flat glass fiber resin composition containing a resin and flat glass fibers having a flat glass filament cross section shape to subject to an injection foam molding, wherein said resin is nylon 6, wherein said foaming agent is a supercritical fluid, wherein said flat glass fiber resin composition contains said flat glass fibers in an amount of from 3 to 15 wt% relative to said flat glass fiber resin composition, and wherein a filament cross section of said flat glass fibers has an aspect ratio (major axis/minor axis) of from 1.5 to 10.

[Advantageous Effects of Invention]

The method for foam molding a flat glass fiber-reinforced resin of the present invention comprising the step of: adding a foaming agent to a flat glass fiber resin composition containing a resin and flat glass fibers having a flat glass filament cross section shape to subject to an injection foam molding, wherein said resin is nylon 6, wherein said foaming agent is a supercritical fluid, wherein said flat glass fiber resin composition contains said flat glass fibers in an amount of from 3 to 15 wt% relative to said flat glass fiber resin composition, and wherein a filament cross section of said flat glass fibers has an aspect ratio (major axis/minor axis) of from 1.5 to 10, and thus it can provide an injection foam-molded article which has a finely and evenly foamed state and has a small lowering of strength properties.

[Brief Description of Drawings]

Fig.1 is a diagram for explaining major axis/minor axis of a flat glass fiber filament.

S: cross section of a flat glass fiber filament
R: rectangle circumscribed to a flat glass fiber filament
Ra ... long side of rectangle
Rb ... short side of rectangle

Fig.2 shows photographs taken in operating a surface impact test. Upper three sheets are photographs taken from a side of a molded article in the form of flat plate after dropping an iron plummet, and lower three sheets are photographs taken from below thereof.
Fig.3 is a schematic diagram showing one example of an injection molding machine used in the present invention.

[Reference Signs List]

A    molding material

B    hopper

C    screw

D    cylinder

E    static mixer

F    diffusion chamber

G    nozzle

H    cavity (molded article)

I    mold

J    booster pump

K    gas cylinder

[Description of Embodiments]

The resin composition of the present invention is necessary to contain flat glass fibers. The flat glass fibers in the present invention represent glass fibers, in which a fiber cross section shape is not a round shape but a flat shape such as an elliptical shape, oblong-circular shape, rectangle shape, a shape in which half rounds are connected to both short sides of a rectangle, and cocoon shape.

A converted fiber diameter and a fiber length of the flat glass fibers used in the present invention are not particularly limited. A converted fiber diameter is preferably from 3 $\mu$m to 30 $\mu$m, further preferably from 5 $\mu$m to 20 $\mu$m. When it is less than 3 $\mu$m, it may be difficult to produce a glass fiber. When it exceeds 30 $\mu$m, an effect of strength properties may not be obtained.

A fiber length of the flat glass fibers contained in the resulting foam-molded article is preferably from 50 $\mu$m to 10000 $\mu$m, further preferably from 100 $\mu$m to 1000 $\mu$m.

In the meantime, a converted fiber diameter of the flat glass fibers represents a number average fiber diameter measured when the flat cross section shape is converted to a complete round shape having an area same as an area of the flat cross section shape (a converted fiber diameter which represents a diameter of a round shape having an area same as an area of a cross section shape of said flat glass fibers).

In the meantime, a converted fiber diameter is obtained by measuring a weight per unit length of filaments of the flat glass fibers with a precision balance, dividing the weight by a specific gravity of a glass to determine a cross section area, and calculating a diameter of a corresponding complete round shape having the cross section area to determine the converted fiber diameter. The converted fiber diameter D can be also specifically determined by the following calculation formula:

$$D^2 = (\text{Tex/d} \times N) \times (4/\pi) \times 10^3$$

D: converted fiber diameter ($\mu$m)
Tex: yarn number of flat glass fibers (grams per1000 m)
d = specific gravity of glass (g/cm$^3$)
N: number of filaments of flat glass fibers
$\pi$: circular constant

An aspect ratio (= major axis/minor axis) of a fiber cross section of the flat glass fibers is from 1.5 to 10, preferably from 2.0 to 6.0. When the aspect ratio is less than 1.5, the molded article may not have a sufficient impact resistance or heat resistance. When the aspect ratio exceeds 10, it may be difficult to product a glass fiber per se.

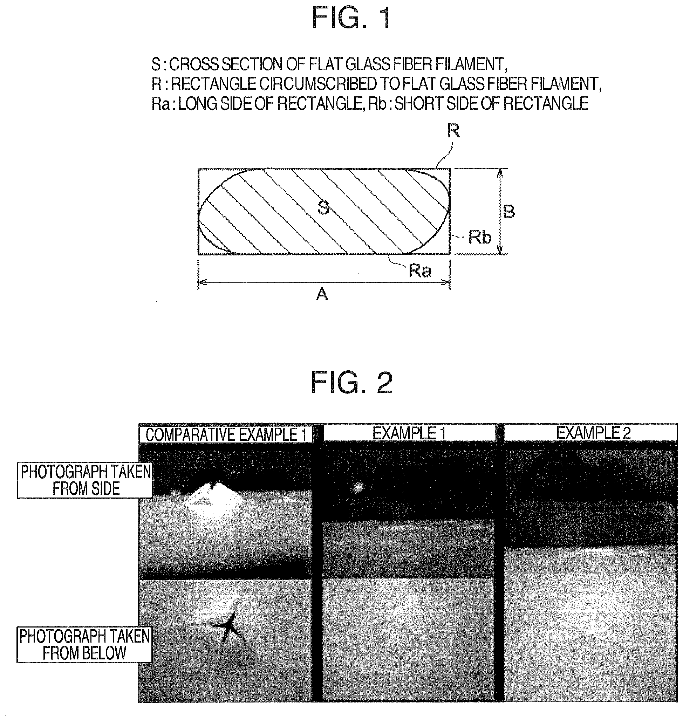

The aspect ratio described at the present specification can be determined from an observed image obtained by observing a cross section of the glass fiber with a scanning electron microscope (SEM). That is, the aspect ratio is obtained by calculating A (= a length of Ra)/B (= a length of Rb) based on lengths of A and B determined from a long side Ra and a short side Rb of a rectangle circumscribed to the flat glass fiber in the observed image as shown in Fig.1.

Kinds of glasses used for the flat glass fibers in the present invention can include a glass having a general glass fiber composition such as E glass, and any compositions for a possible glass fiber such as T glass, NE glass, C glass, S glass, S2 glass and R glass, and are not particularly limited.

The flat glass fibers can be produced by a production method of a known glass fiber, and can be used as an embodiment of a chopped strand prepared by cutting, in a constant length, a collected glass fiber strand focused by a known sizing agent suitable for a blending resin containing an antistatic agent and a film forming agent etc. in addition to a silane coupling agent such as a silane coupling agent, a titanium type coupling agent and a zirconia type coupling agent for an enhancement of a uniform dispersibility and an adhesiveness with a matrix resin, or can be used as an embodiment of a long fiber-reinforced thermoplastic resin pellet coated with a resin.

A content of the flat glass fibers in a resin composition in the flat glass fiber-reinforced polyamide resin foam-molded article of the present invention can be from 3 to 15 wt%, preferably from 5 to 15 wt%. When the content of the flat glass fibers is less than 1 wt%, a reinforcement effect may not be sufficiently obtained. When the content of the flat glass fibers exceeds 40 wt%, an appearance of a molded article may be deteriorated or a weight saving may become difficult.

The resin used in the present invention is polycaproamide (nylon 6).

In the present invention, the resin can be used e.g. in the form of pellet or powder, but is not limited to thereto.

Additionally, insofar as the purpose of the present invention is not deteriorated, it is possible to add, to the main constitutional component resin, another resin (preferably a polyamide resin) or other polymers, an additive, a crystal nucleating agent, a stabilizer such as a heat resistant agent and a UV light absorber, a flame retardant, an antistatic agent, a plasticizer, a lubricant, a coloring agent or a coupling agent and the like, according to properties required.

A means used for mixing the resin with flat glass fibers can include a known technology, and can include a method of melt-kneading with a single screw extruder or a twin screw extruder, but is not particularly limited thereto. From the viewpoint of obtaining a good kneading state, it is preferred to use a twin screw extruder. It is preferred that a kneading temperature is from (a melting point of the resin + 5°C) to (a melting point of the resin + 100°C) and a kneading period of time is from 20 seconds to 30 minutes. In case of a lower temperature or a shorter period of time than these ranges, a kneading or reaction may be insufficient. In contrast, in case of a higher temperature or a longer period of time than these ranges, a decomposition or coloring of the resin may occur. Thus, both cases are not preferable. In order to secure a form stability, it is preferred that raw materials other than a glass fiber are sufficiently melt-kneaded and then a prescribed amount of flat glass fibers is side-fed and subject to a vacuum deaeration.

The flat glass fiber-reinforced resin composition used in the present invention can optionally contain an inorganic filler.

An improvement of surface properties etc. of a molded article can be further attempted by using, as the inorganic filler, several kinds of fibrous or non-fibrous inorganic fillers generally used for a reinforced resin. Examples of the inorganic filler can include e.g.: a fibrous filler such as a glass fiber (having a round shape cross section), a carbon fiber, a potassium titanate whisker, a zinc oxide whisker, an aluminum borate whisker, an aramid fiber, an alumina fiber, a silicon carbide fiber, a ceramic fiber, an asbestos fiber, a gypsum fiber and a metal fiber; a silicate such as wollastonite, zeolite, sericite, kaolin, mica, clay, pyrophilite, bentonite, asbestos, talc and alumina silcate; a metallic oxide such as alumina, silicon oxide, magnesia oxide, zirconium oxide, titanium oxide and iron oxide; a carbonate such as calcium carbonate, magnesium carbonate and dolomite; a sulfate such as calcium sulfate and barium sulfate; a hydroxide such as magnesium hydroxide, calcium hydroxide and aluminum hydroxide; and a non-fibrous filler such as a glass flake, a glass bead, a ceramic bead, boron nitride, silicon carbide and silica, which can be hollow. Plural kinds of these inorganic filler can be used together. Additionally, from the viewpoint of obtaining better mechanical properties or appearance of a molded article, it is preferred to use these fibrous or non-fibrous inorganic fillers by being simultaneously or after being preliminarily treated with a coupling agent such as an isocyanate type compound, an organosilane type compound, an organotitanate type compound, an organoborane type compound and an epoxy compound.

The foaming agent used in the present invention is a supercritical fluid, particularly a gas at a supercritical state.

The gas at a supercritical state, which is preferably used in the present invention and becomes an air bubble nucleus, can include carbon dioxide, nitrogen, argon, helium and the like, but is not limited thereto. Additionally, it can be used alone or as a mixture of two or more kinds thereof. Of these gases, from the viewpoint of a stability and a permeability into a polyamide resin, carbon dioxide and nitrogen are particularly preferred.

An amount of the foaming agent (a supercritical fluid) to be charged at the time of injection foam molding of the resin is not particularly limited, but is preferably from 0.001 to 5.0 parts by weight, more preferably from 0.002 to 3.0 parts by weight, further preferably from 0.005 to 1.0 part by weight, relative to 100 parts by weight of the resin. When the amount of the foaming agent (a supercritical fluid) is less than 0.001 part by weight, a gas injection device has a tendency not to be stably worked. When it exceeds 5.0 parts by weight, a foaming of an injected product has a tendency not to be stable because an amount of gas is excess.

A method of injecting a supercritical fluid to a flat glass fiber-reinforced resin at a molten state at the injection foam molding is not particularly limited, but can include e.g. a method of injecting a gas at a gas state as it is, a method of injecting under pressure, a method of injecting under vacuum, and a method of a gas at a liquid state or a supercritical fluid state with a ram pump etc., and the like.

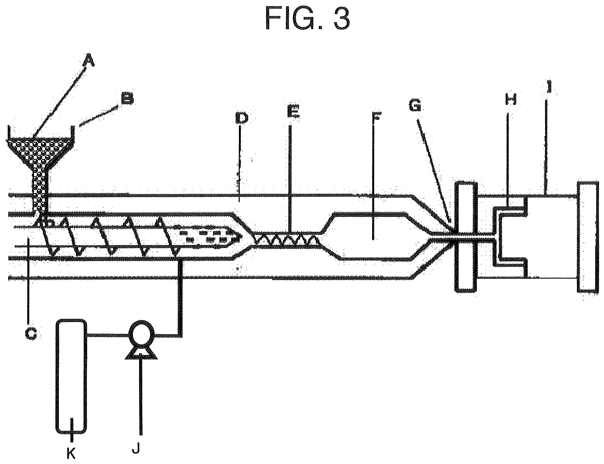

Next, one example of a method for producing the flat glass fiber-reinforced resin foam-molded article of the present invention is explained below by referring to the schematic diagram of Fig.3.

First, a flat glass fiber-reinforced polyamide resin pellet A, as a molding material, is fed from a hopper B of an extruder, and is heat-molten. An inert gas such as nitrogen and carbon dioxide, which becomes a supercritical fluid, is fed from a gas cylinder K, is boosted with a booster pump J, and then is fed to a molten flat glass fiber-reinforced polyamide resin in a cylinder D. During them, an inside of the cylinder D keeps the fed inert gas at a supercritical state and keeps a critical temperature or more and a critical pressure or more so as to dissolve/diffuse into the molten flat glass fiber-reinforced polyamide resin in a short period of time. For example, in case of nitrogen, a critical temperature is -127°C and a critical pressure is 3.5 MPa; and, in case of carbon dioxide, a critical temperature is 31°C and a critical pressure is 7.4 MPa.

The molten flat glass fiber-reinforced polyamide resin and the inert gas are kneaded with a screw C in the cylinder D, and further a complete compatibility state of the molten flat glass fiber-reinforced polyamide resin and the inert gas is formed by a static mixer E and a diffusion chamber F, and then it is injected into a cavity H of a mold I and a pressure is released to form a fine foam-molded article.

At this moment, it is possible to control a foaming diameter by loading a counter pressure in the mold I, and, if required, an inert gas can be fed from a gas cylinder L. A pressure at the time thereof is not particularly limited, but is preferably from 0.5 to 15 MPa.

A method of promoting a foaming by rapidly lowering a pressure in the mold can include a method of injecting the molten flat glass fiber-reinforced polyamide resin into the cavity H of the mold I and then rapidly increasing an inner volume inside of the mold by allowing a part or whole of a core of the mold to pull back.

The flat glass fiber-reinforced resin foam-molded article of the present invention can be applied to all uses which a glass fiber-reinforced resin can be generally applied to. For example, an automobile field requiring a large weight saving can include a cylinder head cover, a timing-belt cover, a balance shaft gear, and the like.

Additionally, uses other than an automobile can include not only a personal computer, a liquid crystal projector, a mobile device, a case of a cellular phone etc., an internal combustion engine use, a machine component for power tool housings etc., but also several kinds of electrical and electronics parts, a medical equipment, a food container, a household good, a stationery, a building material part and a furniture part etc.

In the meantime, an example of a molding in the molding method and the molded article of the present invention mentions an injection above, but is not limited to an injection and can be applied to other moldings such as a compression molding, a transfer molding, an extrusion molding, a blow molding, a cast molding, a vacuum processing, a pressure processing, a calcination processing, BMC (bulk molding compound), SMC (sheet molding compound) and a sheet stamping etc.

[Examples]

Examples are shown below, and the present invention is further specifically explained by the Examples, but the present invention is not limited to the following Examples. Injection foaming conditions and test conditions are as follows.

[Injection molding machine]:

EC160NII commercially available from Toshiba Machine Co., Ltd.
Maximum clamping force 1560 kN; Screw diameter 40 mm
A constitutional sketch of the injection molding machine is show at Fig.3.

[Cylinder temperature]

Temperatures of the cylinder D from a hopper B side toward a nozzle G side were set up to as follows.

Glass fiber-reinforced polyamide 6 resin: 240°C/250°C/255°C/260°C
Glass fiber-reinforced polyamide 9T resin: 270°C/310°C/320°C/330°C

[Foaming agent (supercritical fluid)]

Carbon dioxide was used. An amount thereof injected was 0.01 g relative to 100 g of the glass fiber-reinforced polyamide resin.

[Mold temperature]

It was 90°C in case of nylon 6. It was 120°C in case of nylon 9T.

[Glass fiber]

(1) Flat glass fiber (flat glass fiber commercially available from Nitto Boseki Co., Ltd.: #820): a strand bundling the glass fibers having a kind of glass of E glass, an aspect ratio of 4, a converted fiber diameter of 11 $\mu$m, and a cross section shape of an oblong-circular shape.
(2) Round glass fiber (glass fiber commercially available from Nitto Boseki Co., Ltd.: #451): a strand bundling the glass fibers having a kind of glass of E glass and a glass fiber diameter of 11 $\mu$m.
(3) Flat glass fiber (flat glass fiber commercially available from Nitto Boseki Co., Ltd.: #820): a strand bundling the glass fibers having a kind of glass of E glass, an aspect ratio of 4, a converted fiber diameter of 15 $\mu$m, and a cross section shape of an oblong-circular shape was cut in 3 mm length each to form a chopped strand which was used.

[Polyamide resin]

The following resins were used:

    (1) nylon 6 resin (commercially available from Ube Industries, Ltd.)
    (2) nylon 9T resin (commercially available from Kuraray Co., Ltd.).

[Quality evaluations]

As test specimens for evaluations, JIS (Japanese Industrial Standard) number 1 type tensile test specimen and a flat plate having a size of 50 mm × 195 mm × 1.5 mm were foam-injection molded. Tensile properties for the former test specimen were evaluated, and evaluations of a warpage, a sink mark and a surface impact strength for the latter test specimen were conducted.

    1) Tensile strength: Tensile strength was measured according to JIS K7113.
    2) Warpage and sink mark: Warpage and sink mark of the resulting foam-molded article were evaluated according to visual observation.
    3) Weight saving coefficient: Weight saving coefficient was calculated according to the following expression.

$$\text{[Weight saving coefficient] (\%)} = \text{[weight of foam-molded article]} / \text{[weight of usual injection molded article (without foam molding)]} \times 100$$

    4) Surface impact properties: After an iron plummet having a weight of 500 g was dropped from a height of 500 mm down on a center section of the test specimen of a glass fiber-reinforced polyamide resin molded article in the flat plate form having a size of 50 mm × 195 mm × 1.5 mm, surface impact properties were evaluated by observing a state of the molded article according to visual observation.

(Examples)

<Example 1>

Nylon 6 resin (PA6 resin) incorporating flat glass fibers having a converted fiber diameter of 15 $\mu$m in an amount of 10 wt% relative to the resin was melt-kneaded to form a material, and the material was subjected to a supercritical foam molding by using carbon dioxide ($CO_2$) as a supercritical fluid. Evaluation results of physical properties and appearances of the resulting molded article are shown at Table 1.

<Example 2>

Nylon 6 resin incorporating flat glass fibers having a converted fiber diameter of 11 $\mu$m in an amount of 10 wt% relative to the resin was melt-kneaded to form a material, and the material was subjected to a supercritical foam molding by using carbon dioxide ($CO_2$) as a supercritical fluid. Evaluation results of physical properties and appearances of the resulting molded article are shown at Table 1.

<Referential Example A>

Nylon 9T resin (PA9T resin) incorporating flat glass fibers having a converted fiber diameter of 15 $\mu$m in an amount of 10 wt% relative to the resin was melt-kneaded to form a material, and the material was subjected to a supercritical foam molding by using carbon dioxide ($CO_2$) as a supercritical fluid. Evaluation results of physical properties and appearances of the resulting molded article are shown at Table 1.

< Referential Example B>

Nylon 9T resin incorporating flat glass fibers having a converted fiber diameter of 11 $\mu$m in an amount of 10 wt% relative to the resin was melt-kneaded to form a material, and the material was subjected to a supercritical foam molding by using carbon dioxide ($CO_2$) as a supercritical fluid. Evaluation results of physical properties and appearances of the resulting molded article are shown at Table 1.

(Comparative Examples)

<Comparative Example 1>

Nylon 6 resin incorporating round glass fibers having a fiber diameter of 11 $\mu$m in an amount of 10 wt% relative to the resin was melt-kneaded to form a material, and the material was subjected to a supercritical foam molding by using carbon dioxide ($CO_2$) as a supercritical fluid. Evaluation results of physical properties and appearances of the resulting molded article are shown at Table 2. Additionally, Fig.2 shows photomicrographs of a surface state of the molded article after conducting a drop impact strength test by using the resulting molded article in the form of flat plate.

<Comparative Example 2>

Nylon 9T resin incorporating round glass fibers having a fiber diameter of 11 $\mu$m in an amount of 10 wt% relative to the resin was melt-kneaded to form a material, and the material was subjected to a supercritical foam molding by using carbon dioxide ($CO_2$) as a supercritical fluid. Evaluation results of physical properties and appearances of the resulting molded article are shown at Table 2.

(Referential Examples)

<Referential Example 1>

Nylon 6 resin incorporating round glass fibers having a fiber diameter of 11 $\mu$m in an amount of 10 wt% relative to the resin was melt-kneaded to form a material, and the material was subjected to a usual injection molding without using as a supercritical fluid. Evaluation results of physical properties and appearances of the resulting molded article are shown at Table 2.

<Referential Example 2>

Nylon 6 resin incorporating flat glass fibers having a converted fiber diameter of 15 $\mu$m in an amount of 10 wt% relative to the resin was melt-kneaded to form a material, and the material was subjected to a usual injection molding without using as a supercritical fluid. Evaluation results of physical properties and appearances of the resulting molded article are shown at Table 2.

<Referential Example 3>

Nylon 6 resin incorporating flat glass fibers having a converted fiber diameter of 11 $\mu$m in an amount of 10 wt% relative to the resin was melt-kneaded to form a material, and the material was subjected to a usual injection molding without using as a supercritical fluid. Evaluation results of physical properties and appearances of the resulting molded article are shown at Table 2.

<Referential Example 4>

Nylon 9T resin incorporating round glass fibers having a fiber diameter of 11 $\mu$m in an amount of 10 wt% relative to the resin was melt-kneaded to form a material, and the material was subjected to a usual injection molding without using as a supercritical fluid. Evaluation results of physical properties and appearances of the resulting molded article are shown at Table 2.

<Referential Example 5>

Nylon 9T resin incorporating flat glass fibers having a converted fiber diameter of 15 $\mu$m in an amount of 10 wt% relative to the resin was melt-kneaded to form a material, and the material was subjected to a usual injection molding without using as a supercritical fluid. Evaluation results of physical properties and appearances of the resulting molded article are shown at Table 2.

<Referential Example 6>

Nylon 9T resin incorporating flat glass fibers having a converted fiber diameter of 11 $\mu$m in an amount of 10 wt% relative to the resin was melt-kneaded to form a material, and the material was subjected to a usual injection molding without using as a supercritical fluid. Evaluation results of physical properties and appearances of the resulting molded article are shown at Table 2.

In the meantime, in respect to the results of the surface impact test of the flat plate in Example 1, Example 2 and Comparative Example 1, Fig.2 shows photographs which were taken in operating the surface impact test and which were taken from a side and just below of a molded article in the form of flat plate after dropping an iron plummet.

[Table 1]

Table 1: Flat glass fiber-reinforced polyamide resin foam-molded articles prepared by using a supercritical fluid

| | Polyamide resin | Glass fiber | | | Supercritical fluid |
|---|---|---|---|---|---|
| | | Cross section shape | Average converted fiber diameter ($\mu$m) | Fiber content (wt%) | |
| Example 1 | Nylon 6 | flat | 15 | 10 | $CO_2$ |
| Example 2 | Nylon 6 | flat | 11 | 10 | $CO_2$ |
| Referential Example A | Nylon 9T | flat | 15 | 10 | $CO_2$ |
| Referential Example B | Nylon 9T | flat | 11 | 10 | $CO_2$ |

| | Tensile strength (MPa) | Weight saving coefficient (%) | Sink mark | Warpage | Surface impact properties |
|---|---|---|---|---|---|
| Example 1 | 76 | 20 | ○ | ○ | ○ |
| Example 2 | 81 | 19 | ○ | ○ | ○ |
| Referential Example A | 38 | 19 | ○ | ○ | - |
| Referential Example B | 43 | 19 | ○ | ○ | - |

○: Sink marks and warpages were hardly observed, and no breakages occurred in surface impact properties test.

-: Not measured.

[Table 2]

Table 2: Conventional glass fiber-reinforced polyamide resin injected articles

| | Polyamide resin | Glass fiber | | | Supercritical fluid |
| | | Cross section shape | Average converted fiber diameter (μm) | Fiber content (wt%) | |
|---|---|---|---|---|---|
| Comparative Example 1 | Nylon 6 | round shape (round) | 11 | 10 | $CO_2$ |
| Comparative Example 2 | Nylon 9T | round shape | 11 | 10 | $CO_2$ |
| Referential Example 1 | Nylon 6 | round shape | 11 | 10 | - |
| Referential Example 2 | Nylon 6 | flat | 15 | 10 | - |
| Referential Example 3 | Nylon 6 | flat | 11 | 10 | - |
| Referential Example 4 | Nylon 9T | round shape | 11 | 10 | - |
| Referential Example 5 | Nylon 9T | flat | 15 | 10 | - |
| Referential Example 6 | Nylon 9T | flat | 11 | 10 | - |

| | Tensile strength (MPa) | Weight saving coefficient (%) | Sink mark | Warpage | Surface impact properties |
|---|---|---|---|---|---|
| Comparative Example 1 | 49 | 20 | ○ | ○ | × |
| Comparative Example 2 | 23 | 20 | ○ | ○ | - |
| Referential Example 1 | 67 | - | × | × | - |
| Referential Example 2 | 85 | - | × | ▽ | - |
| Referential Example 3 | 86 | - | × | ▽ | - |
| Referential Example 4 | 50 | - | × | × | - |
| Referential Example 5 | 61 | - | × | ▽ | - |
| Referential Example 6 | 60 | - | × | ▽ | - |

○: Sink marks and warpages were hardly observed, and no breakages occurred in surface impact properties test.

▽: Sink marks and warpages were slightly observed.

×: Sink marks and warpages were remarkably observed, and breakages occurred in surface impact properties test.

-: Not measured.

(Summary of results)

The results shown at Tables 1 and 2 clarify the following matters.

1) According to the results of Examples 1 and 2 and Comparative Example 1, it is clearly understood that, in case of using a PA6 resin, a supercritical foam-molded article obtained by using flat glass fibers results in a molded article having better physical properties and a molded article in the form of box having no warpages or sink marks than a foam-molded article obtained by using round glass fibers. Additionally, it is understood according to the results of Fig.2 that also surface impact properties in the molded article obtained by using flat glass fibers are better than in the molded article obtained by using round glass fibers.

2) Particularly, according to a comparison of Example 2 using flat glass fibers having a converted fiber diameter of 11 $\mu$m to Comparative Example 1 using round glass fibers having an identical fiber diameter of 11 $\mu$m, a tensile strength is 49 MPa in round glass fibers while it is 81 MPa in flat glass fibers, which means that an improvement ratio by using flat glass fibers relative to the case of using round glass fibers is 65.3 % increase which is remarkable enhancement.

It is understood that the value of 81 MPa in flat glass fibers (Example 2) is almost equivalent to 86 MPa in a usual injection molded article, but not a foam-molded article, obtained by using flat glass fibers (Referential Example 3).

For reference's sake, in case of not a foam-molded article in Referential Examples, tensile strengths are 86 MPa and 67 MPa in usual injection molded articles obtained by using flat glass fibers (Referential Example 3) and by using round glass fibers (Referential Example 1), respectively. It means that an improvement ratio by using flat glass fibers relative to the case of using round glass fibers is just 28.4 % increase. In view thereof, the above 65.3 % increase, which is an improvement ratio by using flat glass fibers in the foam-molded article relative to the case of using round glass fibers, is much beyond an expectation and is remarkable enhancement.

In a supercritical injection foam molding, a strength decreasing rate due to a preparation of a foam-molded article as compared to a usual injection molding is 26.9 % in round glass fibers while it is 5.8 % in flat glass fibers, and it is clear that the strength decreasing in flat glass fibers is very small. These situations are summarized at Table 3.

[Table 3]

Table 3: Effects on tensile strength by supercritical foam molding and flat glass fibers in nylon 6 resin

| (MPa) | | | |
|---|---|---|---|
| | Flat glass fibers | Round glass fibers | Strength increasing rate by flat glass fibers |
| Supercritical injection foam molding | (Example 2) 81 | (Comparative Example 1) 49 | 65.3 % |
| Usual injection molding | (Referential Example 3) 86 | (Referential Example 1) 67 | 28.4 % |
| Strength decreasing rate by supercritical foam molding | 5.8 % | 26.9 % | |

3) The case of using PA9T resin is almost similar, and, according to the results of Referential Examples A and B and Comparative Example 2, also the PA9T resin obtains a molded article having good physical properties and a molded article having no warpages or sink marks as well as the PA6 resin.

Particularly, according to a comparison of Referential Example B using flat glass fibers having a converted fiber diameter of 11 $\mu$m to Comparative Example 2 using round glass fibers having an identical fiber diameter of 11 $\mu$m, a tensile strength is 23 MPa in round glass fibers while it is 43 MPa in flat glass fibers, which means that an improvement ratio by using flat glass fibers relative to the case of using round glass fibers is 87.0 % increase which is remarkable enhancement.

Tensile strengths are 60 MPa and 50 MPa in usual injection molded articles (not foam-molded articles) obtained by using flat glass fibers (Referential Example 6) and by using round glass fibers (Referential Example 5), respectively. It means that an improvement ratio by using flat glass fibers relative to the case of using round glass fibers is just 20 % increase. In view thereof, the above 87.0 % increase, which is an improvement ratio by using flat glass fibers in the foam-molded article relative to the case of using round glass fibers, is remarkable enhancement. These situations are summarized at Table 4.

[Table 4]

Table 4: Effects on tensile strength by supercritical foam molding and flat glass fibers in nylon 9T resin

| (MPa) | | | |
|---|---|---|---|
| | Flat glass fibers | Round glass fibers | Strength increasing rate by flat glass fibers |
| Supercritical injection foam molding | (Referential Example B) 43 | (Comparative Example 2) 23 | 87.0 % |
| Usual injection molding | (Referential Example 6) 60 | (Referential Example 4) 50 | 20.0 % |
| Strength decreasing rate by supercritical foam molding | 28.3 % | 54.0 % | |

Additionally, according to Table 4, in a supercritical injection foam molding, a strength decreasing rate due to a preparation of a foam-molded article as compared to a usual injection molding is 54.0 % in round glass fibers while it is 28.3 % in flat glass fibers, and it is clear that the strength decreasing in flat glass fibers is very small.

[Industrial Applicability]

As mentioned above, the injection foam-molded article of the present invention prepared from a reinforced resin (specifically nylon 6) by using a foaming agent (specifically a supercritical fluid) can retain good physical properties such as small sink marks or warpages, which properties were not able to be obtained in a conventional injection foam-molded article, and can secure a good mechanical strength due to the use of the flat glass fibers, and thus it is understood that a weight saving can be sufficiently accomplished.

Additionally, an impact resistance is also enhanced, and thus it is understood that it is suitably used for several kinds of applications including a mobile application.

In the meantime, an injection molding method by using a gas at a supercritical state is mentioned as an injection molding method in the above Examples, but similar matters can be expected also in other molding methods such as an extrusion molding method.

**Claims**

1. A method for foam molding a flat glass fiber-reinforced resin comprising the step of:

    adding a foaming agent to a flat glass fiber resin composition containing a resin and flat glass fibers to perform an injection foam molding,
    wherein said resin is nylon 6,
    wherein said foaming agent is a supercritical fluid,
    wherein said flat glass fiber resin composition contains said flat glass fibers in an amount of from 3 to 15 wt% relative to said flat glass fiber resin composition, and
    wherein a filament cross section of said flat glass fibers has an aspect ratio (major axis/minor axis) of from 1.5 to 10.

2. The method for foam molding a flat glass fiber-reinforced resin according to claim 1, wherein a converted fiber

13

diameter of said flat glass fibers, which represents a diameter of a round shape having an area same as an area of a cross section shape of said flat glass fibers, is from 3 $\mu$m to 30 $\mu$m.

3. The method for foam molding a flat glass fiber-reinforced resin according to claim 1 or 2, wherein said supercritical fluid is $CO_2$.

4. A flat glass fiber-reinforced resin foam-molded article which is obtainable by adding a foaming agent to a flat glass fiber resin composition containing a resin and flat glass fibers having a flat glass filament cross section shape to perform an injection foam molding,
wherein said resin is nylon 6,
wherein said foaming agent is a supercritical fluid,
wherein said flat glass fiber resin composition contains said flat glass fibers in an amount of from 3 to 15 wt% relative to said flat glass fiber resin composition, and
wherein a filament cross section of said flat glass fibers has an aspect ratio (major axis/minor axis) of from 1.5 to 10.

**Patentansprüche**

1. Verfahren zum Formschäumen eines mit einer flachen Glasfaser verstärkten Harzes, umfassend den Schritt:

Zugabe eines Schäumungsmittels zu einer flachen Glasfaserharzzusammensetzung, die ein Harz und flache Glasfasern enthält, um ein Schaumspritzgießen durchzuführen,
wobei das Harz Nylon 6 ist,
wobei das Schäumungsmittel ein überkritisches Fluid ist,
wobei die flache Glasfaserharzzusammensetzung die flachen Glasfasern in einer Menge von 3 bis 15 Gew.-%, relativ zu der flachen Glasfaserharzzusammensetzung, enthält und
wobei ein Filamentquerschnitt der flachen Glasfasern ein Aspektverhältnis (Hauptachse/Nebenachse) von 1,5 bis 10 aufweist.

2. Verfahren zum Formschäumen eines mit einer flachen Glasfaser verstärkten Harzes gemäß Anspruch 1, wobei ein umgerechneter Faserdurchmesser der flachen Glasfasern, welcher einen Durchmesser einer runden Form mit einer Fläche darstellt, die dieselbe Fläche wie eine Fläche einer Querschnittsform der flachen Glasfasern ist, 3 $\mu$m bis 30 $\mu$m beträgt.

3. Verfahren zum Formschäumen eines mit einer flachen Glasfaser verstärkten Harzes gemäß Anspruch 1 oder 2, worin das überkritische Fluid $CO_2$ ist.

4. Formgeschäumter mit einer flachen Glasfaser verstärkter Harzgegenstand, der durch Zugabe eines Schäumungsmittels zu einer flachen Glasfaserharzzusammensetzung, die ein Harz und flache Glasfasern mit einer flachen Glasfilamentquerschnittsform enthält, um ein Schaumspitzgießen durchzuführen, erhältlich ist,
wobei das Harz Nylon 6 ist,
wobei das Schäumungsmittel ein überkritisches Fluid ist,
wobei die flache Glasfaserharzzusammensetzung die flachen Glasfasern in einer Menge von 3 bis 15 Gew.-%, relativ zu der flachen Glasfaserharzzusammensetzung, enthält und
wobei ein Filamentquerschnitt der flachen Glasfasern ein Aspektverhältnis (Hauptachse/Nebenachse) von 1,5 bis 10 aufweist.

**Revendications**

1. Procédé de moulage de mousse d'une résine renforcée de fibres de verre plates comprenant l'étape de :

ajout d'un agent moussant à une composition de résine de fibres de verre plates contenant une résine et des fibres de verre plates pour effectuer un moulage de mousse par injection,
dans lequel ladite résine est nylon 6,
dans lequel ledit agent moussant est un fluide supercritique,
dans lequel ladite composition de résine de fibres de verre plates contient lesdites fibres de verre plates en une quantité de 3 à 15 % en poids par rapport à ladite composition de résine de fibres de verre plates, et

dans lequel une section transversale de filament desdites fibres de verre plates a un facteur de forme (grand axe/petit axe) de 1,5 à 10.

2. Procédé de moulage de mousse d'une résine renforcée de fibres de verre plates selon la revendication 1, dans lequel un diamètre de fibre converti desdites fibres de verre plates, qui représente un diamètre d'une forme arrondie ayant une autre identique à une aire d'une forme de section transversale desdites fibres de verre plates, est de 3 $\mu$m à 30 $\mu$m.

3. Procédé de moulage de mousse d'une résine renforcée de fibres de verre plates selon la revendication 1 ou 2, dans lequel ledit fluide supercritique est $CO_2$.

4. Article moulé en mousse de résine renforcée de fibres de verre plates qui peut être obtenu par ajout d'un agent moussant à une composition de résine de fibres de verre plates contenant une résine et des fibres de verre plates ayant une forme de section transversale de filament plate en verre pour effectuer un moulage de mousse par injection, dans lequel ladite résine est nylon 6, dans lequel ledit agent moussant est un fluide supercritique, dans lequel ladite composition de résine de fibres de verre plates contient lesdites fibres de verre plates en une quantité de 3 à 15 % en poids par rapport à ladite composition de résine de fibres de verre plates, et dans lequel une section transversale de filament desdites fibres de verre plates a un facteur de forme (grand axe/petit axe) de 1,5 à 10.

# FIG. 1

S : CROSS SECTION OF FLAT GLASS FIBER FILAMENT,
R : RECTANGLE CIRCUMSCRIBED TO FLAT GLASS FIBER FILAMENT,
Ra : LONG SIDE OF RECTANGLE, Rb : SHORT SIDE OF RECTANGLE

# FIG. 2

# FIG. 3

**EP 2 570 454 B1**

**Patent documents cited in the description**

- JP 2005194532 A
- JP 2006008952 A
- JP 2002363326 A
- JP 2009079215 A
- JP 2008260229 A
- EP 0246620 A2
- US 20090042011 A1